(19) **Europäisches Patentamt European Patent Office Office européen des brevets**

(11) **EP 4 644 214 A1**

(12) **EUROPEAN PATENT APPLICATION**
published in accordance with Art. 153(4) EPC

(43) Date of publication:
**05.11.2025 Bulletin 2025/45**

(51) International Patent Classification (IPC):
**B62D 25/04** (2006.01)

(21) Application number: **23921256.6**

(22) Date of filing: **20.09.2023**

(52) Cooperative Patent Classification (CPC):
**B62D 25/04**

(86) International application number:
**PCT/JP2023/034081**

(87) International publication number:
**WO 2024/166431 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.02.2023 JP 2023019109**

(71) Applicant: **JFE Steel Corporation Tokyo 100-0011 (JP)**

(72) Inventor: **SUMIKAWA, Satoshi Tokyo 100-0011 (JP)**

(74) Representative: **Haseltine Lake Kempner LLP Bürkleinstrasse 10 80538 München (DE)**

(54) **SUPERIMPOSING STRUCTURAL MEMBER FOR AUTOMOBILE BODY, AND METHOD FOR MANUFACTURING SAME**

(57) The present invention provides an automotive-body layered structural member in which fracture of joints between parts during cold press forming is inhibited and adhesivity between the parts after the forming is improved. This automotive-body layered structural member includes a first part that has been cold press-formed from a first blank of metal sheet and a second part that has been cold press-formed together with the first part from a second blank of metal sheet that has been partially joined to the first blank in a layered state, the first part and the second part being further joined together in a layered state. This automotive-body layered structural member is characterized in that a combination of a strength grade and a sheet thickness of the first blank and a strength grade and a sheet thickness of the second blank has been selected such that portions of the first part and the second part that have sprung back after the cold press forming of these parts adhere to each other in a free state.

[Fig. 4]

EP 4 644 214 A1

**Description**

Technical Field

The present invention relates to an automotive-body layered structural member in which a first part and a second part cold press-formed from blanks of metal sheet have been joined together in a layered state, and to a production method thereof.

Background Art

There is a demand to improve the collision safety of automotive bodies from the viewpoint of protecting occupants in the automotive bodies. On the other hand, reducing the weights of automotive bodies and improving the fuel efficiency is also important for reducing carbon dioxide emissions. To reconcile these collision safety performance and weight reduction of vehicle bodies, more and more high-strength materials have been applied to framework parts of automotive bodies every year. For example, pillar parts including front pillars and center pillars that form the cabin of an automotive body are important framework parts for protecting occupants inside the cabin in the event of a collision of the automobile. Therefore, the pillar parts are required to have the strength to withstand collision load, and high-tensile-strength steel sheets with the strength grade of the tensile strength being 1470 MPa class or higher are also applied to the pillar parts.

Meanwhile, collision safety standards for automobiles have continued to become stricter every year, and automotive bodies need to meet these standards. To this end, layered structural members have been adopted as components of framework parts, such as the aforementioned pillar parts. In a layered structural member, a reinforcing part is layered on a framework part needing strength to thereby partially reinforce a portion of a vehicle body that significantly affects the collision characteristics.

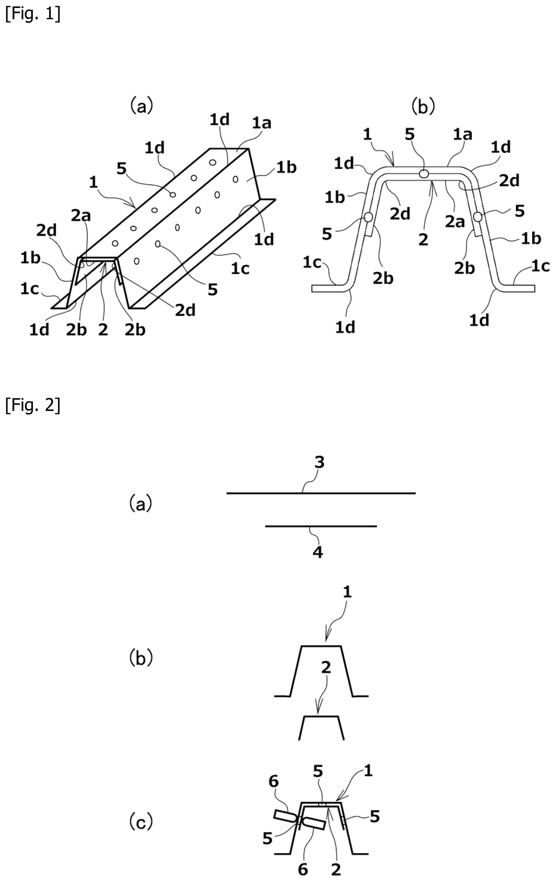

Fig. 1 shows one example of an automotive-body layered structural member. In this example, a main body part indicated by reference sign 1 in the drawing has a hat-shaped cross-section and is composed of a top portion 1a, vertical wall portions 1b, flange portions 1c, and ridge portions 1d that connect these portions to one another. A reinforcing part indicated by reference sign 2 in the drawing is disposed on the inner side of the main body part 1, and in this example, it has a square U-shaped cross-section and is composed of a top portion 2a, vertical wall portions 2b, and ridge portions 2d that connect these portions to one another. The main body part 1 and the reinforcing part 2 are joined together by resistance spot welding, and joints 5 are disposed on the top portions 1a and 2a and the vertical wall portions 1b and 2b.

As a conventional method of producing such an automotive-body layered structural member, a method is commonly practiced in which, for example, as shown in Fig. 2 (a), two sheets of blanks 3 and 4 are prepared, and first, as shown in Fig. 2 (b), the main body part 1 and the reinforcing part 2 are press-formed from these blanks 3 and 4, respectively. Thereafter, as shown in Fig. 2 (c), the main body part 1 and the reinforcing part 2 are layered and joined together at joints 5 by resistance spot welding using electrodes 6.

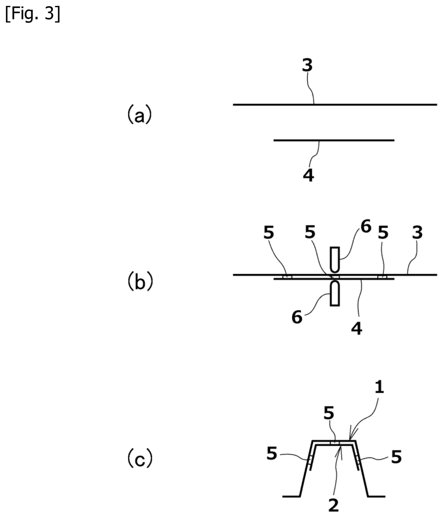

As another method of producing an automotive-body layered structural member, there is a method called a patchwork method. In this method, for example, as shown in Fig. 3 (a), two sheets of blanks 3 and 4 are prepared, and first, as shown in Fig. 3 (b), the blanks 3 and 4 before being formed into the main body part 1 and the reinforcing part 2 are layered and joined together at the joints 5 beforehand by resistance spot welding using the electrodes 6. Then, as shown in Fig. 3 (c), these blanks 3 and 4 having been joined together are press-formed at the same time using one pressing die. Using this patchwork method, which forms the main body part 1 and the reinforcing part 2 in one pressing step, can reduce the cost required for the pressing die. Moreover, having its materials adhering to each other, a structure produced by the patchwork method exhibits high resistance to load when subjected to an external force in the event of a collision.

Members to which the patchwork method is applied are produced mainly by hot pressing (see Patent Literatures 1 to 3). Hot pressing is a forming method that press-forms a part at a high temperature by heating a blank to a high temperature and sandwiching this blank by an upper die and a lower die of a pressing die that face each other in the up-down direction. The blank is rapidly cooled by the pressing die at a bottom dead point (the lowermost point of the upper die) and the metallographic structure thereof transforms into martensite, whereby the strength of the part can be secured. In addition, since the part is formed from a blank at a high temperature, stress occurring in the blank during forming is low and accordingly there is less springback occurring in the part when released from the pressing die, which offers the advantage of excellent shape fixability.

Citation List

Patent Literature

Patent Literature 1: Japanese Patent Laid-Open No. 2013-184221
Patent Literature 2: Japanese Patent Laid-Open No. 2020-131226
Patent Literature 3: Japanese Patent Laid-Open No. 2021-098451

Non Patent Literature

Non Patent Literature 1: Yasuhisa Tozawa: Journal of The Japan Society of Mechanical Engineers, Plasticity and Processing, vol. 68, No. 559, August 1965, p1090-1097, "Theoretical Analysis of the Springback of Sheet Metal"

Summary of Invention

Technical Problem

In recent years, the use of ultra-high-tensile-strength steel sheets with the strength grade of the tensile strength being 1470 MPa class has made it possible for cold press forming that press-forms a blank as is at room temperature to achieve strength of a part equivalent to that achieved by hot pressing. As cold press forming does not involve a blank heating step as in hot pressing, it is excellent in productivity compared with hot pressing and can keep the production cost of parts low.

However, when an automotive-body layered structural member is formed by applying cold press forming to the patchwork method, a difference in the lineal length in the transverse direction occurs between the blank on the inner side in the bending radius direction and the blank on the outer side, particularly at bent portions, such as punch shoulder portions. As a result, partial misalignment occurs between the layered blanks during press forming, and this misalignment can cause fracture of the joints at which the blanks have been joined together beforehand.

Moreover, the blanks differ from each other in the springback angle after forming, so that the portions of the layered parts that have sprung back become separated from each other instead of adhering to each other. Then, squeezing and joining the blanks together against the springback will only generate tensile residual stress at the joints due to the repulsive force of the springback and thereby cause a decrease in the strength of the joints.

The present invention aims to prevent fracture of joints between blanks during press forming when producing an automotive-body layered structural member by the patchwork method. Further, the present invention aims to improve the adhesivity between portions that have been cold press-formed, particularly bent, and prevent a decrease in the strength of joints between these portions, when producing the automotive-body layered structural member by the patchwork method.

Solution to Problem

An automotive-body layered structural member of the present invention that advantageously solves the above-described problems is an automotive-body layered structural member including a first part that has been cold press-formed from a first blank of metal sheet and a second part that has been cold press-formed together with the first part from a second blank of metal sheet that has been partially joined to the first blank in a layered state, the first part and the second part being further joined together in a layered state,

the automotive-body layered structural member being characterized in that a combination of a strength grade and a sheet thickness of the first blank and a strength grade and a sheet thickness of the second blank has been selected such that portions of the first part and the second part that have sprung back after the cold press forming of these parts adhere to each other in a free state.

A production method of an automotive-body layered structural member of the present invention that advantageously solves the above-described problems is a production method of an automotive-body layered structural member including a first part that has been cold press-formed from a first blank of metal sheet and a second part that has been cold press-formed together with the first part from a second blank of metal sheet that has been partially joined to the first blank in a layered state, the first part and the second part being further joined together in a layered state, the production method being characterized in that:

a combination of a strength grade and a sheet thickness of the first blank and a strength grade and a sheet thickness of the second blank is selected such that portions of the first part and the second part in the layered state that have sprung back after the cold press forming adhere to each other in a free state;
the first blank and the second blank of the selected combination of the strength grades and the sheet thicknesses are layered and partially joined together;
from the first blank and the second blank having been layered and partially joined together, the first part and the second part in a state of being layered and partially joined together are formed together by the cold press forming such that portions of these parts that have sprung back adhere to each other in a free state; and

at least the portions adhering to each other of the first part and the second part are further joined together.

Advantageous Effects of Invention

In the automotive-body layered structural member and the production method thereof of the present invention, the combination of the strength grades and the sheet thicknesses of the first blank and the second blank is selected such that the portions of the first part and the second part that have sprung back after the cold press forming adhere to each other in the free state.

When applying cold press forming to the patchwork method and performing press forming, particularly bending, using one die on a first part and a second part together that are in a state of having been layered and partially joined together, selecting the combination of the strength grades and the sheet thicknesses as described above allows the portions of these parts that have sprung back to adhere to each other in the free state, so that little or no tensile residual stress occurs at the joints at which these portions are joined together.

Thus, the automotive-body layered structural member and the production method thereof of the present invention can prevent fracture of joints between blanks during forming when producing, by the patchwork method, a layered structural member in which two parts cold press-formed from blanks each of metal sheet have been joined together in a layered state.

Moreover, they can improve the adhesivity between portions of formed parts that have sprung back and prevent a decrease in the strength of joints between these portions when producing the layered structural member by the patchwork method.

In the automotive-body layered structural member and the production method thereof of the present invention, when sheet thicknesses of the first part and the second part are $t_1$ and $t_2$, respectively; Young's moduli of the first part and the second part are $E_1$ and $E_2$, respectively; yield strengths of the first part and the second part are $\sigma_1$ and $\sigma_2$, respectively; and a radius of a punch of a die for the cold press forming is $R_P$, the first part and the second part may meet the following relationship:

$$\frac{\sigma_1}{E_1 t_1}\left(R_p + t_2 + \frac{t_1}{2}\right) \leq \frac{\sigma_2}{E_2 t_2}\left(R_p + \frac{t_2}{2}\right).$$

This is preferable because then the portions that have sprung back after the cold press forming reliably adhere to each other in the free state.

Moreover, in the automotive-body layered structural member and the production method thereof of the present invention,

the first part may have a top portion and vertical wall portions that connect to both side ends of the top portion; and the second part may have a top portion and a vertical wall portion that connects to at least one side end of the top portion. This is preferable because then a channel-shaped layered structural member in which the first part is reinforced by the second part can be produced.

Furthermore, in the automotive-body layered structural member and the production method thereof of the present invention, strength grades of tensile strengths of the first blank and the second blank may be both 590 MPa class or higher. This is preferable because a lightweight, high-strength layered structural member can be produced.

Brief Description of Drawings

[Fig. 1] Figs. 1 (a) and (b) are a perspective view and a sectional view illustrating an automotive-body layered structural member.

[Fig. 2] Figs. 2 (a), (b), and (c) are explanatory views schematically showing the procedure of producing the automotive-body layered structural member of the above example by a conventional press forming method.

[Fig. 3] Figs. 3 (a), (b), and (c) are explanatory views schematically showing the procedure of a conventional production method for producing the automotive-body layered structural member of the above example by a patchwork method.

[Fig. 4] Figs. 4 (a), (b), (c), and (d) are explanatory views schematically showing the procedure of a production method of one embodiment of the present invention for producing an automotive-body layered structural member of one embodiment of the present invention by the patchwork method.

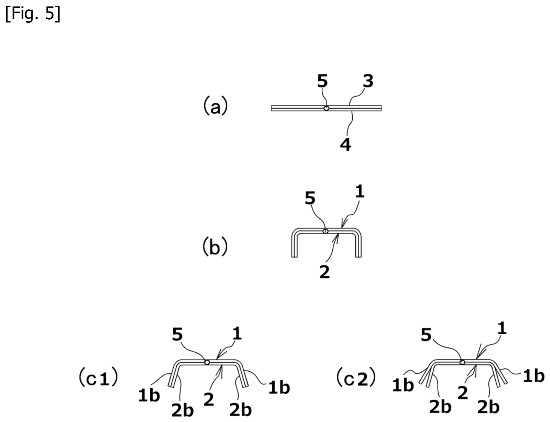

[Fig. 5] Fig. 5 (a) is an explanatory view showing the shape of joined blanks before cold press forming in the production method of the embodiment for producing the automotive-body layered structural member by the patchwork method. Fig. 5 (b) is an explanatory view showing the shape of these joined blanks at a bottom dead point when they have been cold press-formed. Figs. 5 (c1) and (c2) are explanatory views showing the shapes of a main body part and a reinforcing part that have sprung back after cold press forming in the production method of the embodiment and the conventional production method for producing the automotive-body layered structural member by the patchwork method.

[Fig. 6] Figs. 6 (a), (b), and (c) are sectional views showing the shapes of one blank of metal sheet when it is cold press-formed, respectively before the cold press forming, during the cold press forming, and after the cold press forming.

[Fig. 7] Figs. 7 (a), (b), and (c) are sectional views showing the shapes of two blanks of metal sheet when they are cold press-formed by the patchwork method, respectively before the cold press forming, during the cold press forming, and after the cold press forming.

[Fig. 8] Figs. 8 (a), (b), and (c) are a perspective view, a sectional view, and a plan view showing Example and Comparative Example of the automotive-body layered structural member of one embodiment of the present invention.

[Fig. 9] Figs. 9 (a), (b), and (c) are sectional views showing the procedure of cold press-forming automotive-body layered structural members of Example and Comparative Example from two steel sheets by the patchwork method, and showing a close-up of a cross-section of portions of the two steel sheets and a pressing die during the cold press forming.

[Fig. 10] Fig. 10 is an explanatory view showing a test method for confirming the collision performance of the automotive-body layered structural members of Example and Comparative Example.

[Fig. 11] Figs. 11 (a) and (b) are a perspective view and a sectional view showing another embodiment of the automotive-body layered structural member of the present invention.

[Fig. 12] Figs. 12 (a) and (b) are a perspective view and a sectional view showing yet another embodiment of the automotive-body layered structural member of the present invention.

[Fig. 13] Figs. 13 (a) and (b) are a perspective view and a sectional view showing still another embodiment of the automotive-body layered structural member of the present invention.

Description of Embodiments

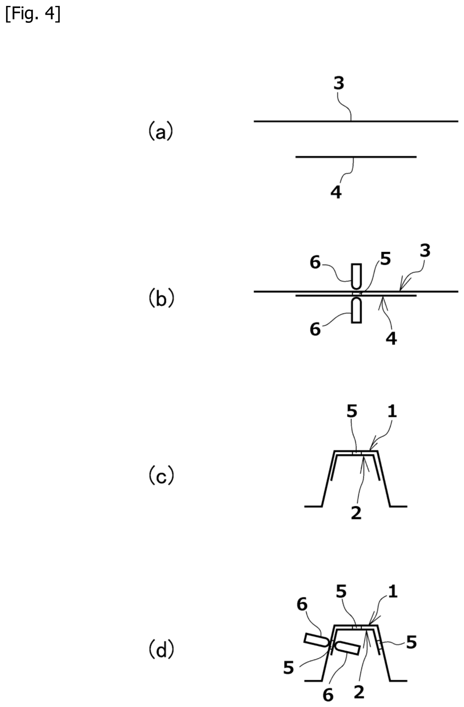

In the following, an embodiment of the present invention will be described in detail based on the drawings. Fig. 4 (a), Fig. 4 (b), Fig. 4 (c), and Fig. 4 (d) are explanatory views schematically showing the procedure of a production method of one embodiment of the present invention for producing an automotive-body layered structural member of one embodiment of the present invention by a patchwork method. In the drawings, similar parts are indicated by the same reference sign.

<First Joining Step>

First, as shown in Fig. 4 (a), a blank 3 is prepared as a first blank of steel sheet, for example, that is to be a main body part 1 as a first part, and a blank 4 is prepared as a second blank of steel sheet, for example, that is to be a reinforcing part 2 as a second part. A determination method of the combination of the strength grades and the sheet thicknesses of these blanks 3 and 4 (hereinafter also referred to as "sheet combination") will be described in detail later. Subsequently, as shown in Fig. 4 (b), the blanks 3 and 4 are temporarily joined together at joints 5 to create joined blanks. As joint areas in this step, central portions of the blanks 3 and 4 in the width direction that are to be a top portion 1a of the main body part 1 and a top portion 2a of the reinforcing part 2 are preferable, as movement of the blanks is relatively small at these portions. For the temporary joining at the joints 5, other than resistance spot welding using electrodes 6 as shown in the drawing, any methods can be applied that join the blanks 3 and 4 of metal sheets together, such as arc welding, laser welding, seam welding, and mechanical joining.

<Forming Step>

Next, as shown in Fig. 4 (c), the main body part 1 having a hat-shaped cross section and the reinforcing part 2 having a square U-shaped cross-section that have target shapes are integrally cold press-formed from the joined blanks. Since each of the main body part 1 and the reinforcing part 2 here has a substantially straight shape, the cold press forming of the main body part 1 and the reinforcing part 2 is mainly bending; however, the cold press forming in this forming step may instead be drawing or a combination of bending and drawing. When the target shape is, for example, a shape combining a straight shape and a curved shape, multiple steps of press forming may be performed for the respective portions each having a different shape.

<Second Joining Step>

Finally, as shown in Fig. 4 (d), portions of the main body part 1 and the reinforcing part 2 that have not yet been joined together, here vertical wall portions 1b and 2b, are joined together at the joints 5 that are formed by, for example, resistance spot welding using the electrodes 6.

Thus, in the production method of the embodiment, the portions of the two blanks 3 and 4 that have not been temporarily joined together are joined together at the joints 5 after cold press forming, so that, for example, even when misalignment occurs between the portions of the blanks 3 and 4 that have not been temporarily joined together due to a difference in bending radius during cold press forming, this does not lead to a problem that the joints 5 fracture. However, one concern in cold press forming by this patchwork method is springback of bent portions.

Fig. 5 (a) is an explanatory view showing the shape of joined blanks before cold press forming in the production method of the embodiment for producing the automotive-body layered structural member by the patchwork method. Fig. 5 (b) is an explanatory view showing the shape of the joined blanks at a bottom dead point when they have been cold press-formed. Fig. 5 (c1) and Fig. 5 (c2) are explanatory views showing the shapes of the main body part and the reinforcing part that have sprung back after cold press forming in the production method of the embodiment and a conventional production method for producing the automotive-body layered structural member by the patchwork method.

When the joined blanks as shown in Fig. 5 (a) that are the blank 3 and the blank 4 having been layered and partially joined together at the joints 5 are integrally cold press-formed, particularly bent, into the main body part 1 and the reinforcing part 2 as partially shown in Fig. 5 (b), ridge portions resulting from the bending deform slightly in the direction of returning to the original shape after release from the die. As a result, springback occurs in which the angles of the vertical wall portions 1b and 2b connecting to the ridge portions of the main body part 1 and the reinforcing part 2 change.

Here, when the springback of the main body part 1 on the outer side is smaller than that of the reinforcing part 2 on the inner side, or when the springbacks of the parts 1 and 2 are equivalent, as shown in Fig. 5 (c1), the vertical wall portions 1b and 2b of the main body part 1 and the reinforcing part 2 assume a state of adhering to each other. On the other hand, when the springback of the main body part 1 on the outer side is larger than that of the reinforcing part 2 on the inner side, as shown in Fig. 5 (c2), the vertical wall portions 1b and 2b assume different angles from each other, leaving a gap between the main body part 1 and the reinforcing part 2. This gap makes it impossible or difficult to join the vertical wall portions 1b and 2b together in the subsequent joining step. Then, joining the vertical wall portions 1b and 2b together against the springbacks ends up with generating tensile residual stress at the joints due to the repulsive forces of the vertical wall portions 1b and 2b and thereby causing a decrease in the strength of the joints. Therefore, implementing the patchwork method in cold press forming requires selecting the sheet combination taking into account the springbacks that occur in the respective blanks.

As a result of vigorous studies, the inventor of the present invention found that the case shown in Fig. 5 (c) could be realized by appropriately selecting the sheet combination that is a combination of the strength grades of the tensile strengths and the sheet thicknesses of two blanks used for the patchwork method. The automotive-body layered structural member and the production method thereof of the embodiment of the present invention are based on this finding.

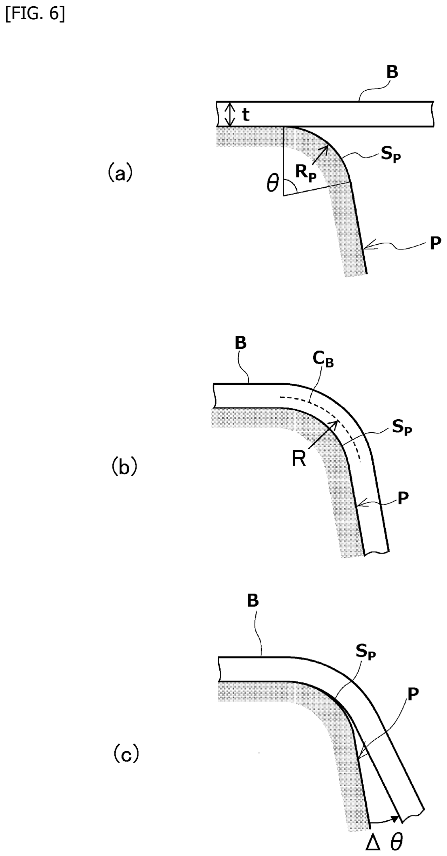

Fig. 6 is sectional views schematically showing springback that occurs at a bent ridge portion of one blank B of metal sheet when the blank B is bent by a punch shoulder portion $S_P$ of a cold pressing die. Fig. 6 (a), Fig. 6 (b), and Fig. 6 (c) show the shapes before press forming, during press forming, and after press forming, respectively.

According to Formulae (19), (20)' in Non Patent Literature 1, an angular change $\Delta\theta$ when a sheet material is bent at an angle $\theta$ can be expressed as follows:

$$\Delta\theta \approx 3\frac{\sigma R}{Et}\theta \qquad \cdots (1)$$

Here, t is the sheet thickness of the blank; E is the Young's modulus of the blank; $\sigma$ is the yield strength of the blank; and R is the radius of curvature of the blank at a sheet thickness center $C_B$.

Further, when the bending radius of the punch shoulder portion of the pressing die is $R_p$, R is:

$$R = R_p + \frac{t}{2} \qquad \cdots (2)$$

Therefore, the angular change $\Delta\theta$ is:

$$\Delta\theta \approx 3\frac{\sigma}{Et}\left(R_p + \frac{t}{2}\right)\theta \qquad \cdots (3)$$

This Formula (3) indicates that a material with higher strength and a smaller sheet thickness undergoes a larger angular change.

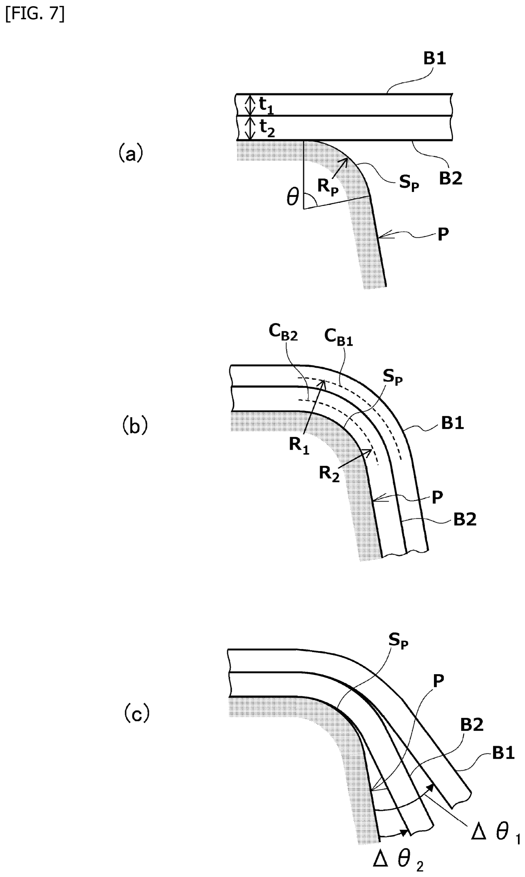

Fig. 7 is sectional views schematically showing springbacks that occur at bent ridge portions of two blanks each of metal sheet when these blanks are bent. The blank on the outer side of the bend will be referred to as a blank B1, and the blank on the inner side of the bend will be referred to as a blank B2. When the sheet thicknesses of the blank B1 and the blank B2 are $t_1$ and $t_2$, respectively; the Young's moduli thereof are $E_1$ and $E_2$, respectively; the yield strengths thereof are $\sigma_1$ and $\sigma_2$, respectively; and the bending radius of the punch shoulder portion $S_P$ of the pressing die is $R_p$, angular changes $\Delta\theta_1$ and $\Delta\theta_2$ occurring in the blank B1 and the blank B2 can be expressed by the following Formula (4) and Formula (5):

$$\Delta\theta_1 \approx 3\frac{\sigma_1}{E_1 t_1}\left(R_p + t_2 + \frac{t_1}{2}\right)\theta \qquad \cdots (4)$$

$$\Delta\theta_2 \approx 3\frac{\sigma_2}{E_2 t_2}\left(R_p + \frac{t_2}{2}\right)\theta \qquad \cdots (5)$$

In Fig. 7, $R_1$ is the radius of curvature of the blank B1 at a sheet thickness center $C_{B1}$, and $R_1 = R_p + t_2 + t_1/2$; $R_2$ is the radius of curvature of the blank B2 at a sheet thickness center $C_{B2}$, and $R_2 = R_p + t_2/2$.

Here, when $\Delta\theta_1 > \Delta\theta_2$, i.e., when the angular change of the blank B1 on the outer side of the bend is larger than that of the blank B2 on the inner side of the bend, a gap occurs between the formed parts, which leads to joining failure in the subsequent joining step. On the other hand, when $\Delta\theta_1 \leq \Delta\theta_2$, i.e., when the angular change of the blank B1 on the outer side of the bend is smaller than or equivalent to that of the blank B2 on the inner side of the bend, the blanks assume a state of adhering to each other. From the above Formula (4) and Formula (5), a condition for achieving this state is as follows:

$$\frac{\sigma_1}{E_1 t_1}\left(R_p + t_2 + \frac{t_1}{2}\right) \leq \frac{\sigma_2}{E_2 t_2}\left(R_p + \frac{t_2}{2}\right) \qquad \cdots (6)$$

By selecting a sheet combination of the blanks B1 and B2 that meets this condition, an automotive-body layered structural member can be obtained that has excellent shape quality and eliminates the concern about difficulty or failure of joining in the subsequent step.

<Examples>

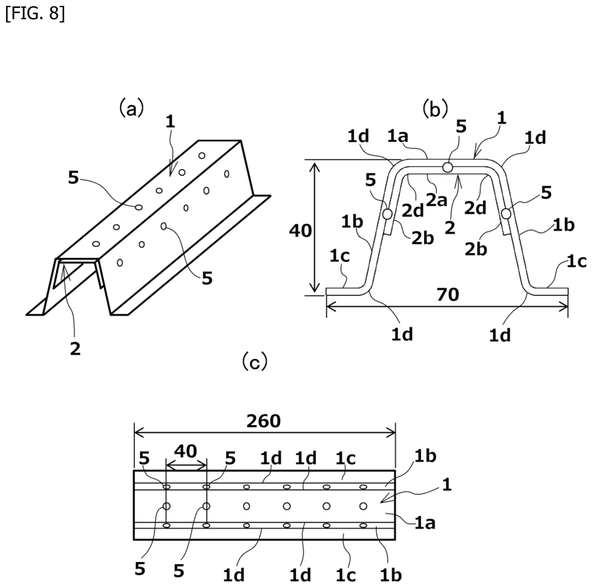

Example (Example of Present Invention) and Comparative Example that were implemented to confirm the workings and advantages of the automotive-body layered structural member and the production method thereof of the embodiment will be described below. Fig. 8 (a), Fig. 8 (b), and Fig. 8 (c) are a perspective view, a sectional view, and a plan view of Example and Comparative Example of the automotive-body layered structural member of the embodiment that were respectively manufactured by the production method of Example of the embodiment and a production method of Comparative Example that was different therefrom only in the sheet combination of the blanks. The main body part 1 has a hat-shaped cross-section and is composed of the top portion 1a, the vertical wall portions 1b, the flange portions 1c, and the ridge portions 1d that connect these portions to one another. The reinforcing part 2 is disposed layered on the inner side of the main body part 1, and in these Example and Comparative Example has a square U-shaped cross-section and is composed of the top portion 2a, the vertical wall portions 2b, and the ridge portions 2d that connect these portions to one another.

The main body part 1 and the reinforcing part 2 were joined together at the joints 5 by resistance spot welding, and the joints 5 were disposed in the top portions 1a and 2a and the vertical wall portions 1b and 2b. The intervals between the joints 5 in the longitudinal direction were 40 mm. The materials of the steel sheets used for the blank 3 to be the main body part 1 and the blank 4 to be the reinforcing part 2 varied in terms of the strength grade of the tensile strength in five levels: 590 MPa class, 780 MPa class, 980 MPa class, 1180 MPa class, and 1470 MPa class, and in terms of the sheet thickness in six levels: 1.0 mm, 1.2 mm, 1.4 mm, 1.6 mm, 1.8 mm, and 2.0 mm.

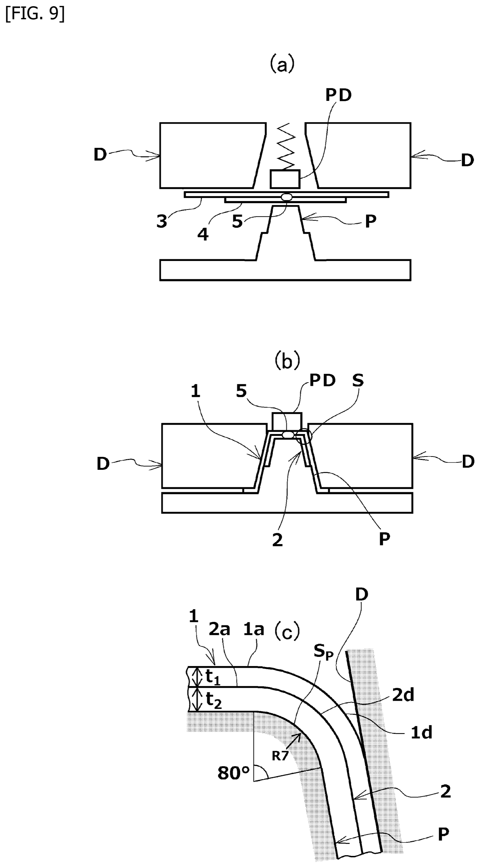

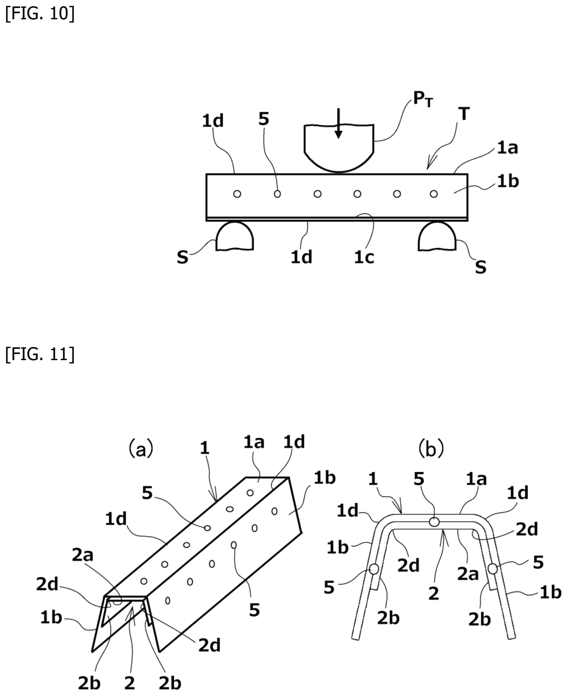

Fig. 9 (a), Fig. 9 (b), and Fig. 9 (c) are sectional views showing the procedure of cold press-forming the automotive-body layered structural members of Example and Comparative Example from two steel sheets by the patchwork method, and showing a close-up of a cross-section of portions of the two steel sheets and the pressing die during the cold press forming. Fig. 10 is an explanatory view showing a test method for confirming the collision performance of the automotive-body layered structural members of Example and Comparative Example.

First, as shown in Fig. 10, a test piece T (of which portions are indicated by the same reference signs as in the main body part 1) of the same shape and dimensions as the automotive-body layered structural members of Example and Comparative Example shown in Figs. 8 (a) to (c) was created on an ordinary computer, and a three-point bending simulation involving pressing down a central portion of the test piece T by a punch $P_T$ while supporting it from below at two points near both end portions by support parts S was run on that computer. Then, a total of 12 patterns of the combination of the strength grade and the sheet thickness, i.e., the sheet combination, that could achieve target collision performance (punch reaction force) were selected.

Next, using the selected sheet combinations, the automotive-body layered structural members of Example and Comparative Example were manufactured by the steps shown in Fig. 9. Specifically, first, the blank 3 and the blank 4 were prepared and layered, and central portions thereof in the width direction were temporarily joined together at the joints 5 of resistance spot welding to create joined blanks. Subsequently, from these joined blanks, as shown in Fig. 9 (a) and Fig. 9 (b), the main body part 1 and the reinforcing part 2 in a layered state were integrally cold press-formed, mainly by bending, using a press forming die.

In the process, as shown in Fig. 9 (a), to stabilize the blanks 3 and 4 being press-formed, central portions thereof in the width direction were clamped by a pad PD and a punch P so as to be fixed. Next, as shown in Fig. 9 (b), a die D was lowered and the blanks 3 and 4 were squeezed between the die D and the punch P to thereby form the top portion 1a, the vertical wall portions 1b, and the flange portions 1c as well as the top portion 2a and the vertical wall portions 2b. Here, as shown in Fig. 9 (c), in a cross-section S of portions of the two steel sheets and the pressing die, the bending radius of the ridge portions 1d and 2d of the main body part 1 and the reinforcing part 2 formed by the shoulder portion $S_P$ of the punch P was 7 mm (R7) and the bent angle of the vertical wall portions 1b and 2b was 80°. After this press forming, the vertical wall portions 1b and the vertical wall portions 2b that sprang back were joined together at the joints 5 of resistance spot welding.

Of the automotive-body layered structural members that were formed parts resulting from the press forming, those of which the sheet combination condition met the above-described Formula (6) were regarded as Examples and those of which the sheet combination condition did not meet it were regarded as Comparative Examples, and each member was evaluated as to whether separation between the vertical wall portions 1b and the vertical wall portions 2b occurred. The Young's modulus E in Formula (6) was 205 GPa for all the five types of strength grades. Table 1 below shows the evaluation result for each sheet combination condition. In each of Comparative Examples 1 to 6, the angular change of the ridge portions 1d of the main body part 1 became larger than the angular change of the ridge portions 2d of the reinforcing part 2, resulting in separation between the vertical wall portions 1b, 2b. By contrast, in Examples 1 to 6, separation between the main body part 1 and the reinforcing part 2 did not occur.

[Table 1]

| | | Main body part (blank 1) | | | Reinforcing part (blank 2) | | | Whether formed parts were separated |
|---|---|---|---|---|---|---|---|---|
| | | Strength grade | Yield strength (MPa) | Sheet thickness (mm) | Strength grade | Yield strength (MPa) | Sheet thickness (mm) | |
| | Comparative Example 1 | 1470 MPa class | 1270 | 1.0 | 590 MPa class | 400 | 1.2 | Separated |
| | Comparative Example 2 | 1180 MPa class | 870 | 1.2 | 780 MPa class | 550 | 1.8 | Separated |
| | Comparative Example 3 | 1180 MPa class | 870 | 1.4 | 780 MPa class | 550 | 1.0 | Separated |
| | Comparative Example 4 | 980 MPa class | 680 | 1.2 | 980 MPa class | 680 | 2.0 | Separated |
| | Comparative Example 5 | 980 MPa class | 680 | 1.4 | 980 MPa class | 680 | 1.6 | Separated |
| | Invention Example 1 | 980 MPa class | 680 | 1.6 | 980 MPa class | 680 | 1.2 | Not separated |
| | Comparative Example 6 | 780 MPa class | 550 | 1.2 | 1180 MPa class | 870 | 2.0 | Separated |

(continued)

| | Main body part (blank 1) | | | Reinforcing part (blank 2) | | | Whether formed parts were separated |
|---|---|---|---|---|---|---|---|
| | Strength grade | Yield strength (MPa) | Sheet thickness (mm) | Strength grade | Yield strength (MPa) | Sheet thickness (mm) | |
| Invention Example 2 | 780 MPa class | 550 | 1.4 | 1180 MPa class | 870 | 1.8 | Not separated |
| Invention Example 3 | 780 MPa class | 550 | 1.8 | 1180 MPa class | 870 | 1.2 | Not separated |
| Invention Example 4 | 590 MPa class | 400 | 1.0 | 1470 MPa class | 1270 | 1.8 | Not separated |
| Invention Example 5 | 590 MPa class | 400 | 1.2 | 1470 MPa class | 1270 | 1.6 | Not separated |
| Invention Example 6 | 590 MPa class | 400 | 1.6 | 1470 MPa class | 1270 | 1.4 | Not separated |

As has been described above, the embodiment was proven to be able to produce an automotive-body layered structural member in which fracture of joints during forming is inhibited and adhesivity between the parts is excellent. Therefore, the automotive-body layered structural member of the embodiment can be suitably applied to cold press forming of collision-resistant parts composed of ultra-high-strength materials, such as front pillars, center pillars, and floor cross-members.

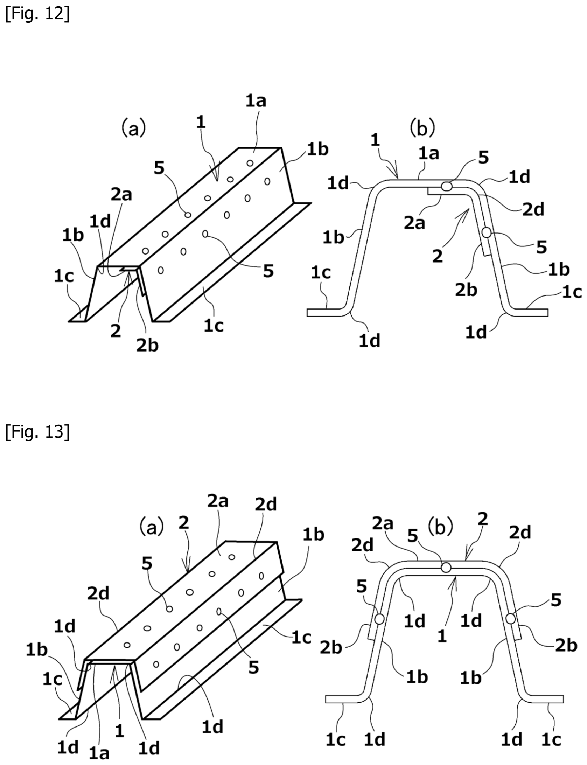

As other embodiments of the automotive-body layered structural member to which the present invention is applicable, the main body part 1 and the reinforcing part 2 may both have a shape with a square U-shaped cross-section as shown in Fig. 11, or the reinforcing part 2 may have a shape with an L-shaped cross-section as shown in Fig. 12. In addition, the reinforcing part 2 may be disposed on the outer side of the main body part 1 as shown in Fig. 13.

Further, the material of the blanks used in the present invention is not limited to steel sheets, and other examples include metal sheets such as aluminum alloy sheets, magnesium alloy sheets, and titanium alloy sheets. The strength of the blanks used in the present invention is not particularly limited either, as long as it is suitable for an automotive-body layered structural member.

While the embodiment of the present invention has been described above, the automotive-body layered structural member and the production method thereof of the present invention are not limited to the above-described embodiment and can be changed as appropriate within the scope described in the claims. For example, the first part and the second part may both have a cross-sectional shape that is a curved shape, such as an arc shape, as a whole.

Industrial Applicability

Thus, the automotive-body layered structural member and the production method thereof of the present invention can prevent fracture of joints between blanks during forming when producing, by the patchwork method, a layered structural member in which two parts cold press-formed from blanks each of metal sheet have been joined together in a layered state. Moreover, they can improve the adhesivity between portions of formed parts that have sprung back and prevent a decrease in the strength of joints between these portions when producing the layered structural member by the patchwork method.

Reference Signs List

1: Main body part
1a: Top portion
1b: Vertical wall portion
1c: Flange portion
1d: Ridge portion
2: Reinforcing part
2a: Top portion

2b: Vertical wall portion
2d: Ridge portion
3, 4: Blank
5: Joint
6: Electrode
B, B1, B2: Blank
D: Die
PD: Pad
P: Punch
$P_T$: Punch
S: Support part
$S_P$: Punch shoulder portion
T: Test piece
$t_1$, $t_2$: Sheet thickness

## Claims

1. An automotive-body layered structural member comprising a first part that has been cold press-formed from a first blank of metal sheet and a second part that has been cold press-formed together with the first part from a second blank of metal sheet that has been partially joined to the first blank in a layered state, the first part and the second part being further joined together in a layered state,
the automotive-body layered structural member being **characterized in that** a combination of a strength grade and a sheet thickness of the first blank and a strength grade and a sheet thickness of the second blank has been selected such that portions of the first part and the second part that have sprung back after the cold press forming of these parts adhere to each other in a free state.

2. The automotive-body layered structural member according to claim 1, wherein
when sheet thicknesses of the first part and the second part are $t_1$ and $t_2$, respectively; Young's moduli of the first part and the second part are $E_1$ and $E_2$, respectively; yield strengths of the first part and the second part are $\sigma_1$ and $\sigma_2$, respectively; and a radius of a punch of a die for the cold press forming is $R_P$, the first part and the second part meet the following relationship:

$$\frac{\sigma_1}{E_1 t_1}\left(R_p + t_2 + \frac{t_1}{2}\right) \le \frac{\sigma_2}{E_2 t_2}\left(R_p + \frac{t_2}{2}\right).$$

3. The automotive-body layered structural member according to claim 1, wherein:

   the first part has a top portion and vertical wall portions that connect to both side ends of the top portion; and
   the second part has a top portion and a vertical wall portion that connects to at least one side end of the top portion.

4. The automotive-body layered structural member according to any one of claims 1 to 3, wherein
strength grades of tensile strengths of the first blank and the second blank are both 590 MPa class or higher.

5. A production method of an automotive-body layered structural member including a first part that has been cold press-formed from a first blank of metal sheet and a second part that has been cold press-formed together with the first part from a second blank of metal sheet that has been partially joined to the first blank in a layered state, the first part and the second part being further joined together in a layered state,
**characterized in that**:

   a combination of a strength grade and a sheet thickness of the first blank and a strength grade and a sheet thickness of the second blank is selected such that portions of the first part and the second part in the layered state that have sprung back after the cold press forming adhere to each other in a free state;
   the first blank and the second blank of the selected combination of the strength grades and the sheet thicknesses are layered and partially joined together;
   from the first blank and the second blank having been layered and partially joined together, the first part and the second part in a state of being layered and partially joined together are formed together by the cold press forming such that portions of these parts that have sprung back adhere to each other in a free state; and
at least the portions adhering to each other of the first part and the second part are further joined together.

6. The production method of the automotive-body layered structural member according to claim 5, wherein
when sheet thicknesses of the first part and the second part are $t_1$ and $t_2$, respectively; Young's moduli as material strengths of the first part and the second part are $E_1$ and $E_2$, respectively; yield strengths as material strengths of the first part and the second part are $\sigma_1$ and $\sigma_2$, respectively; and a radius of a punch of a die for the cold press forming is $R_p$, the first part and the second part meet the following relationship:

$$\frac{\sigma_1}{E_1 t_1}\left(R_p + t_2 + \frac{t_1}{2}\right) \leq \frac{\sigma_2}{E_2 t_2}\left(R_p + \frac{t_2}{2}\right).$$

7. The production method of the automotive-body layered structural member according to claim 5, wherein:

the first part has a top portion and vertical wall portions that connect to both side ends of the top portion; and
the second part has a top portion and a vertical wall portion that connects to at least one side end of the top portion.

8. The production method of the automotive-body layered structural member according to any one of claims 5 to 7, wherein
strength grades of tensile strengths of the first blank and the second blank are both 590 MPa class or higher.

EP 4 644 214 A1

[Fig. 1]

[Fig. 2]

[Fig. 3]

[Fig. 4]

[Fig. 5]

[FIG. 6]

(a)

(b)

(c)

[FIG. 7]

(a)

(b)

(c)

[FIG. 8]

[FIG. 9]

(a)

(b)

(c)

[FIG. 10]

[FIG. 11]

[Fig. 12]

[Fig. 13]

# INTERNATIONAL SEARCH REPORT

International application No.

**PCT/JP2023/034081**

## A. CLASSIFICATION OF SUBJECT MATTER

***B62D 25/04***(2006.01)i
FI:    B62D25/04 Z

According to International Patent Classification (IPC) or to both national classification and IPC

## B. FIELDS SEARCHED

Minimum documentation searched (classification system followed by classification symbols)

B62D17/00-25/08; B62D25/14-29/04; B21D22/00-26/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 2020-121336 A (TOYOTA TEKKO KK) 13 August 2020 (2020-08-13) | 1-8 |
| A | JP 2021-154370 A (NIPPON STEEL CORPORATION) 07 October 2021 (2021-10-07) | 1-8 |
| A | JP 2019-98951 A (MAZDA MOTOR CORPORATION) 24 June 2019 (2019-06-24) | 1-8 |
| A | WO 2019/194308 A1 (NIPPON STEEL CORPORATION) 10 October 2019 (2019-10-10) | 1-8 |
| A | JP 2020-131226 A (TOYOTA TEKKO KK) 31 August 2020 (2020-08-31) | 1-8 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034081**

| Patent document cited in search report | | | Publication date (day/month/year) | Patent family member(s) | | | Publication date (day/month/year) |
|---|---|---|---|---|---|---|---|
| JP | 2020-121336 | A | 13 August 2020 | (Family: none) | | | |
| JP | 2021-154370 | A | 07 October 2021 | (Family: none) | | | |
| JP | 2019-98951 | A | 24 June 2019 | US | 2019/0168811 | A1 | |
| | | | | EP | 3492189 | A1 | |
| | | | | CN | 109969264 | A | |
| WO | 2019/194308 | A1 | 10 October 2019 | US | 2021/0197525 | A1 | |
| | | | | EP | 3733321 | A1 | |
| | | | | CN | 110582359 | A | |
| | | | | CA | 3061938 | A1 | |
| | | | | KR | 10-2020-0116496 | A | |
| | | | | MX | 2020010274 | A | |
| | | | | TW | 201943867 | A | |
| JP | 2020-131226 | A | 31 August 2020 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013184221 A
- JP 2020131226 A
- JP 2021098451 A

**Non-patent literature cited in the description**

- **YASUHISA TOZAWA**. Theoretical Analysis of the Springback of Sheet Metal. *Journal of The Japan Society of Mechanical Engineers, Plasticity and Processing*, August 1965, vol. 68 (559), 1090-1097